# DEMANDE DE BREVET EUROPEEN

(11) **EP 4 151 460 A1**
(43) Date de publication de la demande: **22.03.2023**
(21) Numéro de dépôt: 22193000.1
(22) Date de dépôt: 30.08.2022
(51) Int. Cl.: B60L 58/27, B60L 1/02, B60L 58/12, B60L 3/00, B60L 3/12, H01M 10/615, H01M 10/625, H01M 10/48

(54) **PROCÉDÉ DE COMMANDE D'UN ORGANE DE RÉCHAUFFAGE DE BATTERIE DE VÉHICULE AUTOMOBILE**

(30) Priorité: 21.09.2021 FR 2109931
(71) Demandeur: Renault s.a.s, 92100 Boulogne Billancourt (FR)
(72) Inventeur: OLLIVIER, Laurent, 78280 GUYANCOURT (FR); PLANTE, Francois, 78280 GUYANCOURT (FR); ROLLAT, MYRIAM, 78280 GUYANCOURT (FR)

(57) **Abrégé**

Procédé de commande (1) d'un organe de réchauffage d'une batterie d'accumulateurs électriques d'un véhicule automobile, ledit organe de réchauffage permettant à ladite batterie d'atteindre une température cible suffisante pour que l'intégralité de l'énergie disponible de la batterie soit exploitable par le véhicule automobile, ledit organe de réchauffage étant alimenté par ladite batterie, ledit procédé comprenant les étapes suivantes :
- Déterminer (2) un paramètre d'évolution de la consommation énergétique dudit véhicule automobile ;
- Acquérir (3) une valeur représentative de l'état de charge de ladite batterie ;
- Déterminer (4) une température seuil fonction de la valeur représentative de l'état de charge de ladite batterie acquise et du profil de roulage déterminé ;
- Mesurer (5) la température de ladite batterie ;
- Commander (6) l'activation de l'organe de réchauffage de ladite batterie lorsque la température mesurée est inférieure ou égale à la température seuil déterminée.

## Description

La présente invention se rapporte à la gestion de batteries d'accumulateurs électriques de véhicule automobile, plus particulièrement à un procédé de commande d'un organe de réchauffage de batteries.

Les batteries d'accumulateurs électriques sont utilisées principalement dans les véhicules automobiles hybrides ou électriques. Les performances d'une batterie comme sa puissance, son énergie disponible et sa durabilité sont très sensibles à sa température. En effet, à basse température, la batterie présente une double dégradation : les pertes internes vont augmenter et l'énergie utile va se réduire en raison de l'impossibilité à vider totalement la batterie. Pour lui permettre de fonctionner dans des conditions optimales, il est donc nécessaire lorsque celle-ci est trop froide de la réchauffer.

Il existe plusieurs moyens de gestion du chauffage de la batterie. Le premier moyen consiste à réchauffer la batterie pendant la phase de charge au préalable de la phase de roulage à la demande du conducteur. Cette méthode permet ainsi d'utiliser l'énergie du réseau pour réchauffer la batterie sans toucher à son autonomie. Cependant, elle ne permet pas d'optimiser les conditions de fonctionnement de la batterie pendant le déplacement. Un autre moyen consiste à réchauffer la batterie pendant la phase de roulage lorsque sa température descend en dessous d'un certain seuil prédéterminé. Le dispositif de réchauffage utilise alors la batterie pour fonctionner, diminuant ainsi l'autonomie du véhicule. L'utilisation d'un seuil fixe permet de limiter la dégradation des performances de la batterie dans la plupart des cas, cependant dans certains cas l'autonomie de la batterie restante est insuffisante pour permettre à la batterie d'atteindre une température d'utilisation suffisamment élevée pour avoir des conditions optimales de fonctionnement. La demande EP3758131A1 présente un procédé de chauffage de batterie d'un véhicule automobile en fonction d'un seuil comprenant deux paramètres : une température et une valeur de l'état de charge de la batterie. Le seuil utilisé est donc lui aussi un seuil fixe. Ce critère n'est donc pas toujours optimal puisque le réchauffage peut se déclencher lorsque la batterie n'en a pas vraiment besoin et ainsi dégrader son autonomie.

Les solutions proposées par cet art antérieur présentent des limites en termes de consommation du véhicule et d'optimisation du procédé de réchauffage de la batterie. Aussi, il existe le besoin d'un procédé de commande permettant d'activer le réchauffage dans les seuls cas pertinent prenant en compte l'état de charge actuel de la batterie et la consommation du véhicule.

On propose un procédé de commande d'un organe de réchauffage d'une batterie d'accumulateurs électriques d'un véhicule automobile, ledit organe de réchauffage permettant à ladite batterie d'atteindre une température cible suffisante pour que l'intégralité de l'énergie disponible de la batterie soit exploitable par le véhicule automobile, ledit organe de réchauffage étant alimenté par ladite batterie, ledit procédé comprenant les étapes suivantes :
- Déterminer un paramètre d'évolution de la consommation énergétique dudit véhicule automobile ;
- Acquérir une valeur représentative de l'état de charge de ladite batterie ;
- Déterminer une température seuil en fonction de la valeur représentative de l'état de charge et du paramètre d'évolution de la consommation énergétique déterminé, en-dessous de laquelle une partie de l'énergie disponible de ladite batterie est inexploitable par ledit véhicule automobile ;
- Mesurer la température de ladite batterie ;
- Commander l'activation de l'organe de réchauffage de ladite batterie lorsque la température mesurée est inférieure ou égale à la température seuil déterminée.

Avantageusement et de manière non limitative, l'étape de détermination d'un paramètre d'évolution de la consommation énergétique dudit véhicule automobile comprend l'utilisation d'un profil de roulage du véhicule automobile.

Un avantage est de pouvoir déterminer rapidement la consommation énergétique à partir de profil de roulage type déterminé.

Avantageusement et de manière non limitative, l'étape de détermination d'un paramètre d'évolution de la consommation énergétique dudit véhicule automobile comprend le calcul d'une consommation électrique prévisionnelle de ladite batterie soit en faisant une moyenne sur le trajet réalisé soit en anticipant la consommation à partir d'un trajet planifié. Un avantage est de pouvoir déterminer une consommation électrique précise et qui se rapproche de la consommation électrique qui sera réalisé lors du trajet.

Avantageusement et de manière non limitative, l'étape de détermination de la température seuil comprend un calcul direct ou une interpolation sur une cartographie de température seuil.

En particulier, les valeurs sont dépendantes des caractéristiques intrinsèques de la batterie qui pour une température et un SOC donnés indique l'énergie exploitable disponible.

Un avantage est de pouvoir réaliser le calcul rapidement.

Avantageusement et de manière non limitative, le procédé comprend aussi les étapes suivantes :
- Détermination d'une température d'extinction en fonction de la température mesurée au-dessus de laquelle l'autonomie de la batterie est dégradée ;
- Mesure de la température de la batterie ; et
- Commander l'arrêt du dispositif de réchauffage de la batterie.

Un avantage est de pouvoir arrêter le réchauffage avant de dégrader l'autonomie de la batterie.

Avantageusement et de manière non limitative, les étapes du procédé sont réitérées selon une fréquence prédéterminée.

L'invention concerne aussi un dispositif de commande d'un organe de réchauffage d'une batterie d'accumulateurs électriques d'un véhicule automobile, ledit organe de réchauffage permettant à ladite batterie d'atteindre une température cible suffisante pour que l'intégralité de l'énergie disponible de la batterie soit exploitable par le véhicule automobile, ledit organe de réchauffage étant alimenté par ladite batterie, ledit dispositif de commande comprenant :
- Des moyens de détermination d'un profil de roulage dudit véhicule automobile ;
- Des moyens d'acquisition d'une valeur représentative de l'état de charge de ladite batterie ;
- Des moyens de détermination d'une température seuil en fonction de la valeur représentative de l'état de charge et du profil de roulage déterminé, en-dessous de laquelle une partie de l'énergie disponible de ladite batterie est inexploitable par ledit véhicule automobile ;
- Des moyens de mesure de la température de ladite batterie ;

L'invention concerne un dispositif de commande comprenant des moyens de commande de l'activation de l'organe de réchauffage de ladite batterie lorsque la température mesurée est inférieure ou égale à la température seuil déterminée.

L'invention concerne aussi un système électrique comprenant une batterie d'accumulateurs électriques, un organe de réchauffage et un dispositif de commande.

L'invention concerne aussi un véhicule automobile électrique ou hybride comprenant un système électrique.

L'invention concerne aussi tout véhicule terrestre, maritime ou aérien comprenant une batterie d'accumulateurs électriques destinée à stocker une énergie de propulsion et un système électrique.

D'autres particularités et avantages de l'invention ressortiront à la lecture de la description faite ci-après de plusieurs modes de réalisation particulier de l'invention, donné à titre indicatif mais non limitatif, en référence aux dessins annexés sur lesquels :
[Fig. 1] est un organigramme présentant les différentes étapes du procédé de commande d'un organe de réchauffage d'une batterie d'accumulateurs électriques d'un véhicule automobile selon un premier mode de réalisation.
[Fig. 2] est un organigramme présentant les différentes étapes du procédé de commande selon un deuxième mode de réalisation.
[Fig. 3] est un organigramme présentant les différentes étapes du procédé de commande selon un troisième mode de réalisation.

L'invention concerne un système électrique dans un véhicule automobile comprenant une batterie d'accumulateurs électriques, un organe de réchauffage et un dispositif de commande de cet organe de réchauffage.

L'organe de réchauffage permet d'augmenter la température de la batterie pour qu'elle atteigne une température cible prédéterminé correspondant à la température nécessaire pour que l'intégralité de l'énergie disponible soit exploitable par le véhicule.

Ce dispositif de commande met en oeuvre un procédé de commande 1 d'un organe de réchauffage.

Dans ce mode de réalisation, le dispositif de commande est un calculateur embarqué, mais il peut être de manière alternative un processeur, un coeur de processeur, un tout autre dispositif adapté.

Un avantage de l'invention est d'activer le réchauffage de la batterie uniquement dans les cas où une exploitation d'un état de charge bas et une valorisation énergétique ont été identifiés.

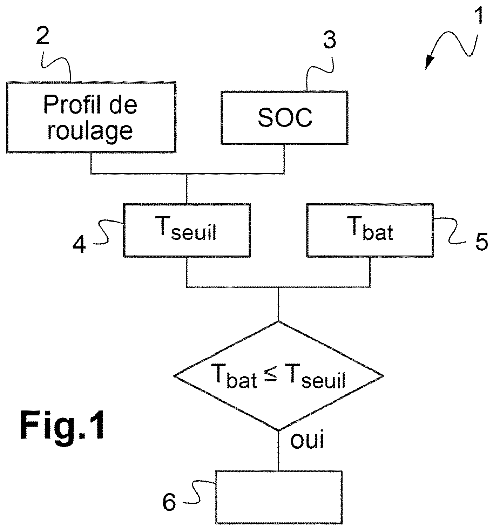

Selon un mode de réalisation principal de l'invention, en référence à la figure 1, le procédé de commande 1 d'un organe de réchauffage comprend tout d'abord une étape de détermination 2 d'un paramètre d'évolution de la consommation énergétique du véhicule automobile.

Ainsi l'objectif est de prévoir la vitesse de consommation de l'énergie disponible produite par la batterie.

Ici, ce paramètre d'évolution de la consommation énergétique du véhicule automobile comprend un profil de roulage du véhicule.

Le procédé 1 selon l'invention comprend une étape d'acquisition 3 de la valeur représentative de l'état de charge de la batterie, en anglais *State Of Charge,* fréquemment abrégé SoC.

L'objectif est de pouvoir adapter le seuil de température en fonction de l'état de charge de la batterie. En effet, le réchauffage de la batterie est valorisable si l'énergie récupérable en la réchauffant est supérieure à l'énergie nécessaire à ce réchauffage.

On entend par valorisation de la batterie la capacité d'exploiter l'ensemble de l'énergie disponible produite par la batterie.

Ainsi, plus l'état de charge est faible, plus le réchauffage de la batterie sera valorisable. Dans la mise en oeuvre de l'invention, l'étape d'acquisition 3 peut être réalisée avant l'étape de détermination 2.

Le procédé 1 comprend ensuite une étape de détermination 4 d'une température seuil Tₛₑᵤᵢₗ fonction de la valeur représentative de l'état de charge de ladite batterie acquise et du profil de roulage déterminé.

En-dessous de cette température seuil Tₛₑᵤᵢₗ, l'intégralité de l'énergie disponible de ladite batterie est inexploitable par ledit véhicule automobile.

En effet, l'objectif du réchauffage de la batterie est qu'elle atteigne une température suffisante pour que le véhicule puisse exploiter l'intégralité de l'énergie disponible. Or, la batterie est aussi employée pour alimenter électriquement l'organe de réchauffage. Il faut donc s'assurer que la batterie ait l'énergie nécessaire pour alimenter l'organe de réchauffage jusqu'à atteindre la température cible.

Ainsi, la température seuil Tₛₑᵤᵢₗ correspond à la température nécessaire pour qu'il y ait suffisamment d'énergie disponible exploitable pour alimenter le véhicule et l'organe de réchauffage jusqu'à ce que la batterie atteigne la température cible.

Selon un mode de réalisation particulier, cette étape de détermination de la température seuil est réalisée par calcul direct.

Selon un autre mode de réalisation particulier, cette étape de détermination est réalisée par interpolation sur une cartographie de température précalculée.

Le procédé selon l'invention comprend une étape de mesure 5 de la température T_{bat} de la batterie.

Cette étape de mesure est réalisée par au moins une sonde de température placée au voisinage de la batterie ou sur ou dans l'un des éléments constitutifs de la batterie.

Le procédé comprend ensuite une commande 6 de l'activation de l'organe de réchauffage de ladite batterie lorsque la température T_{bat} mesurée est inférieure ou égale à la température seuil Tₛₑᵤᵢₗ déterminée.

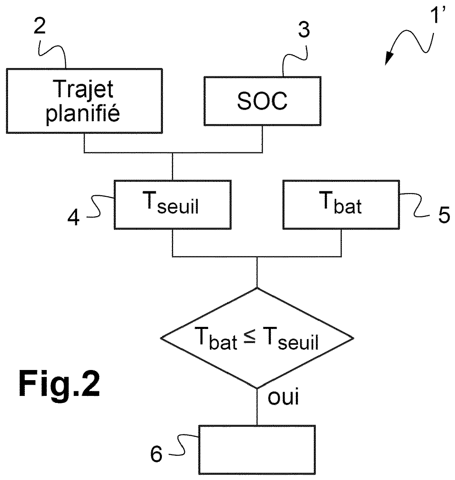

Selon un deuxième mode de réalisation, en référence à la figure 2, le procédé l'est une modification du procédé 1 selon le mode de réalisation principal, pour lequel le paramètre d'évolution de la consommation énergétique du véhicule déterminé à l'étape de détermination 2 est une prévision de la consommation électrique du véhicule.

Cette prévision est ici obtenue en faisant une moyenne de la consommation électrique sur les trajets réalisés.

Dans un mode de réalisation alternatif de ce deuxième mode de réalisation, la consommation est estimée par anticipation à partir d'un trajet planifié par le GPS du véhicule, une application mobile relié au véhicule, ou tout autre moyen de guidage du véhicule automobile.

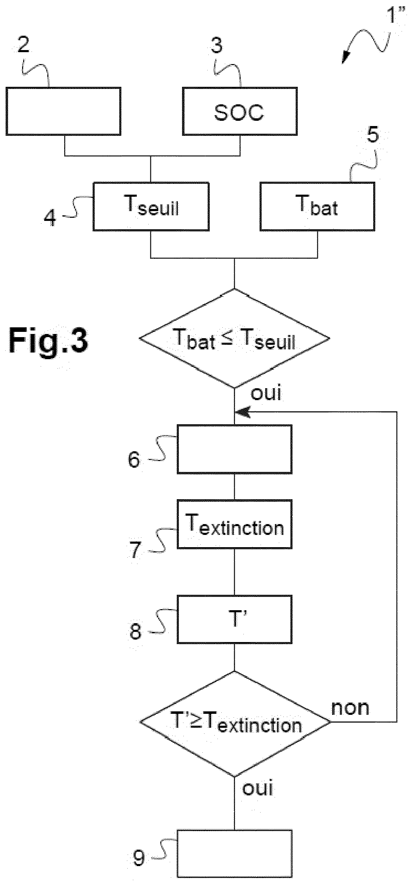

Selon un troisième mode de réalisation, en référence à la figure 3, le procédé de commande 1" comprend des étapes supplémentaires à celles du premier et deuxième mode de réalisation, permettant de déterminer un critère d'arrêt de l'organe de réchauffage et de commander cet arrêt.

Ce troisième mode de réalisation peut ainsi compléter indifféremment le procédé 1 du premier mode de réalisation ou le procédé 1' du deuxième mode de réalisation.

En effet, l'organe de réchauffage étant alimenté par la batterie, celle-ci voit son autonomie diminuer pendant le réchauffage. Ainsi, il faut pouvoir anticiper l'arrêt du réchauffage, afin de limiter la dégradation de l'autonomie de la batterie.

Pour cela, le procédé selon l'invention comprend tout d'abord une étape de détermination 7 d'une température d'extinction T_{extinction}.

Cette température d'extinction correspond à la température cible à atteindre lors du réchauffage moins une marge de sécurité judicieusement réglée.

En effet, lorsque l'arrêt de l'organe de réchauffage de la batterie est déclenché, le chauffage de celle-ci continue par inertie thermique. Il y a donc un temps de latence entre l'arrêt de l'organe de réchauffage et l'arrêt de l'augmentation de la température batterie. Il est recommandé que le seuil Textinction qui détermine la condition d'extinction du réchauffage de la batterie soit corrigé en temps réel selon une fréquence judicieuse à définir, pour prévenir une variation de la consommation du véhicule éventuellement non maîtrisée (changement des conditions de roulage : trafic, masse, météo, mode de conduite, pente, ...) qui pourrait conduire à ce que la différence, entre le restant d'énergie exploitable et l'énergie nécessaire au réchauffage, tende vers zéro voire devienne au pire cas, négative. Il est donc prévu, sans limitation de solution, un algorithme qui s'appuie sur la détermination d'une consommation moyenne sur une période définie judicieusement à partir d'une surveillance de l'évolution du SOC, que cette consommation moyenne soit observée, ou prédite. Lequel algorithme conduit ainsi à la détermination en temps réel, de la valeur Textinction, optimale et adaptée aux circonstances actuelles et futures du roulage, de condition d'extinction 7.

Une fois cette température seuil déterminée, le procédé comprend une nouvelle étape de mesure 8 de la température courante T' de la batterie.

Enfin, le procédé comprend une étape de commande 9 de l'arrêt de l'organe de réchauffage lorsque la température de la batterie T'mesurée est supérieure ou égale à la température d'extinction calculée Textinction.

Les étapes 6, 7, 8 et l'étape de commande 9 sont réitérées jusqu'à ce que l'étape de commande 9 active l'arrêt de l'organe de réchauffage.

Selon une mise en oeuvre particulière, les étapes du procédé sont réitérées selon une fréquence prédéterminée.

Ainsi, on peut réchauffer la batterie quand cela est nécessaire notamment sur de long trajet. Selon un mode de réalisation particulier, les différentes données mesurées et calculées lors de la mise en oeuvre d'un procédé de commande selon l'invention sont mises à la disposition de l'utilisateur du véhicule, par exemple en affichant ces données sur une interface homme-machine, telle qu'un afficheur ou un écran sur le tableau de bord du véhicule automobile.

Selon un mode de réalisation alternatif, pouvant être indifféremment basé sur chacun des modes de réalisation précédents, le procédé 1-1" comprend une étape de vérification des données avant l'étape de détermination de la température seuil Tₛₑᵤᵢₗ.

Ainsi si une donnée s'avère erroné alors le procédé ne prend pas en compte ces valeurs et ne déclenche pas le réchauffage quand bien même la température de la batterie T_{bat} est inférieure à la température seuil Tₛₑᵤᵢₗ calculé.

## Revendications

1. Procédé de commande (1, 1', 1") d'un organe de réchauffage d'une batterie d'accumulateurs électriques d'un véhicule automobile, ledit organe de réchauffage permettant à ladite batterie d'atteindre une température cible suffisante pour que l'intégralité de l'énergie disponible de la batterie soit exploitable par le véhicule automobile, ledit organe de réchauffage étant alimenté par ladite batterie, ledit procédé comprenant les étapes suivantes :
- Déterminer (2) un paramètre d'évolution de la consommation énergétique dudit véhicule automobile ;
- Acquérir (3) une valeur représentative de l'état de charge de ladite batterie ;
- Déterminer (4) une température seuil en fonction de la valeur représentative de l'état de charge et du paramètre d'évolution de la consommation énergétique déterminé, en-dessous de laquelle une partie de l'énergie disponible de ladite batterie est inexploitable par ledit véhicule automobile ;
- Mesurer (5) la température de ladite batterie ;
- Commander (6) l'activation de l'organe de réchauffage de ladite batterie lorsque la température mesurée est inférieure ou égale à la température seuil déterminée.

2. Procédé de commande (1) selon la revendication 1, **caractérisé en ce que** l'étape de détermination (2) d'un paramètre d'évolution de la consommation énergétique dudit véhicule automobile comprend l'utilisation d'un profil de roulage dudit véhicule automobile.

3. Procédé de commande (1') selon la revendication 1 ou 2, **caractérisé en ce que** l'étape de détermination (2) d'un paramètre d'évolution de la consommation énergétique dudit véhicule automobile comprend le calcul d'une consommation électrique prévisionnelle de ladite batterie soit en faisant une moyenne sur le trajet réalisé soit en anticipant la consommation à partir d'un trajet planifié.

4. Procédé de commande (1, 1', 1") selon l'une quelconque des revendications 1 à 3, **caractérisé en ce que** l'étape de détermination (4) de la température seuil comprend un calcul direct ou une interpolation sur une cartographie de température seuil.

5. Procédé de commande (1") selon l'une quelconque des revendications 1 à 4, **caractérisé en ce qu'**il comprend les étapes suivantes :
- Détermination (7) d'une température d'extinction en fonction de la température mesurée au-dessus de laquelle l'autonomie de la batterie est dégradée ;
- Mesure (8) de la température de la batterie ; et
- Commander (9) l'arrêt du dispositif de réchauffage de la batterie.

6. Procédé de commande (1, 1', 1") selon l'une quelconque des revendications 1 à 5, **caractérisé en ce que** les étapes dudit procédé sont réitérées selon une fréquence prédéterminée.

7. Dispositif de commande d'un organe de réchauffage d'une batterie d'accumulateurs électriques d'un véhicule automobile, ledit organe de réchauffage permettant à ladite batterie d'atteindre une température cible suffisante pour que l'intégralité de l'énergie disponible de la batterie soit exploitable par le véhicule automobile, ledit organe de réchauffage étant alimenté par ladite batterie, ledit dispositif de commande comprenant :
- Des moyens de détermination d'un profil de roulage dudit véhicule automobile ;
- Des moyens d'acquisition d'une valeur représentative de l'état de charge de ladite batterie ;
- Des moyens de détermination d'une température seuil en fonction de la valeur représentative de l'état de charge et du profil de roulage déterminé, en-dessous de laquelle une partie de l'énergie disponible de ladite batterie est inexploitable par ledit véhicule automobile ;
- Des moyens de mesure de la température de ladite batterie ;
- Des moyens de commande de l'activation de l'organe de réchauffage de ladite batterie lorsque la température mesurée est inférieure ou égale à la température seuil déterminée.

8. Dispositif de commande selon la revendication 7 comprenant des moyens de commande d'extinction de l'organe de réchauffage de ladite batterie lorsque la température mesurée est supérieure ou égale à la température déterminée, en vue d'extinction.

9. Système électrique comprenant une batterie d'accumulateurs électriques, un organe de réchauffage et un dispositif de commande selon la revendication 8.

10. Véhicule automobile électrique ou hybride comprenant un système électrique selon la revendication 9.

11. Véhicule terrestre, maritime ou aérien comprenant une batterie d'accumulateurs électriques destinée à stocker une énergie de propulsion et un système électrique selon la revendication 9.
